# EUROPEAN PATENT APPLICATION

(11) **EP 2 908 015 A1**
(43) Date of publication of application: **19.08.2015**
(21) Application number: 15155181.9
(22) Date of filing: 16.02.2015
(51) Int. Cl.: F16B 7/04

(54) **Multi-functional pole connection device**

(30) Priority: 17.02.2014 US 201461940819 P
(71) Applicant: Kokido Development Limited, Hong Kong (HK)
(72) Inventor: Bruneel, Jean Julien, Kwun Tong, Kowloon (HK)
(74) Representative: Loyer & Abello

(57) **Abstract**

Multi-functional connection device (10) attached to the end of a telescopic pole for facilitating connection and disconnection of the pole (20) and a maintenance tool with a handle (40) having a standard V-clip (48) or alternative clip. The connection device (10) has two opposing flexible arms (11) used to push down the pins (42) of the tool handle (40) when disconnecting the tool handle (40) from the pole and has two opposing tapered ramps (16) at the rim (17) capable of pushing down the pins (42) of the tool handle (40) when connecting the tool handle (40) to the pole (20).

## Description

### Cross reference to related application

This application claims priority from US Provisional Application No. 61/940,819, filed February 17, 2014, the content of which is incorporated herewith by reference.

### Field of the invention

The present invention relates to the field of mechanical devices in the industry of household maintenance tools, particularly those for swimming pool maintenance.

### Background of the invention

Many household maintenance tools, particularly those for swimming pools, need connection to a pole for reaching a further distance, such as to the ceiling or the bottom of the swimming pool. Such connection does not need to be permanent but should be detachable for easy storage when not in use. At the present time, a common connection for such purposes is an insertive type where the end of the tool handle is slid into a telescopic pole with a longer length. Particularly, for swimming pool maintenance tools, the industry has standardized the telescopic poles and tool handles with certain diameters and tool handles are generally equipped with a standard V-clip locking mechanism so that the telescopic pole is interchangeable with each other, and can be attached to different tools, such as brushes, leaf skimmers, vacuum heads, etc.

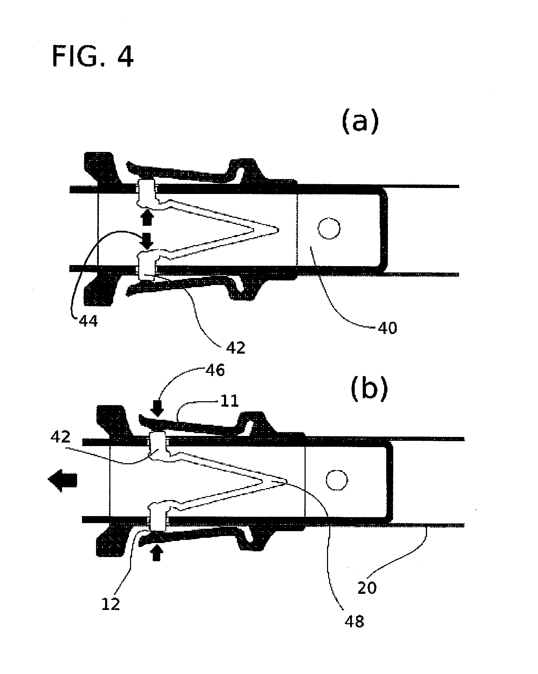

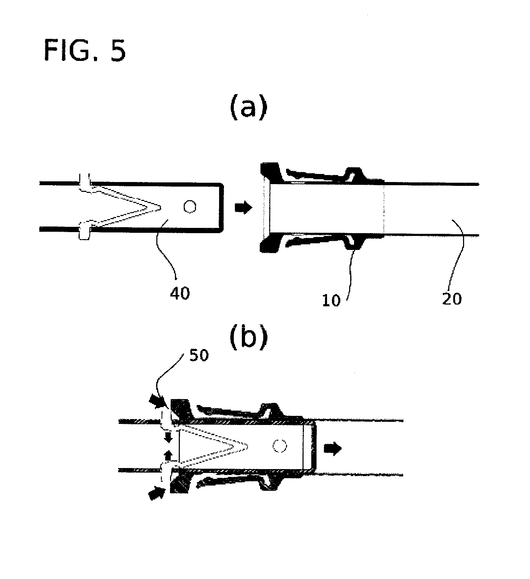

Specifically, in order to allow different tools to be used on a single telescopic pole, and to easily exchange them, maintenance tools are usually produced with a handle of a standard diameter, which can be inserted into a telescopic pole of a standard inner diameter. The handle of the maintenance tool is secured in the telescopic pole by a standard V-clip. As shown in FIGs. 4 and 5, the V-clip (not part of the present invention) is disposed inside the tool handle and has two pins, elastically protruding out of the handle as urged by a residual spring force. The pins can be resiliently pushed back into the handle against the spring force by an external counter force (such as pressing on each pin by two fingers of the user), and be retracted from the surface of the handle so than the handle can slide into the telescopic pole. The wall of the telescopic pole has two bores corresponding to the two pins of the V-clip respectively and, once the handle is slid inside the pole to a position where the pins are aligned with the bores of the pole, the pins are springily protruding out of the bores as urged by the residual spring force of the V-clip, thereby locking and securing the tool handle onto the pole.

While simple, the V-clip design has an inconvenience that the pins must be pressed down by the user's fingers in order to connect or disconnect the tool from the pole. For connection, the fingers are pressing the pins and sliding the handle into the pole at the same time. As the fingers must be on the pins all the time until the pins start entering into the pole, they easily get caught pinched at the entrance between the pin (as well as the outer surface of the handle) and the rim of the pole, which can be painful and occasionally cause serious injuries to the skin. The similar incidence can also happen while performing the disconnection. When the fingers press the pin to cause it to retract, the skin of the fingers can easily get caught between the pin and the bore of the pole while the pin is receding into the pole.

To avoid such pinch incidence, alternative designs for the clip have been developed over the years, which include a separate means to squeeze the clip while assembling or disassembling the tool handle from the pole. While effective to avoid pinching of the fingers, these alternative clips require a longer handle on the tool to accommodate the clip, which increases the size and cost of the handle. As a result, many tool manufacturers continue to produce swimming pool maintenance tools using the simple and standard V-clip.

### Summary of the inventions

Accordingly, one object of the present invention is to provide a simple connection accessory to facilitate attaching and detaching of the pole from the tool, and to avoid the incidence of pinching during the assembly or disassembly process. The connection device as an accessory may be made with standardized sizes and dimensions for the purpose of retrofitting an existing telescopic pole that matches a corresponding maintenance tool handle, or custom made with special sizes and dimensions for particular demands where non standardized sizes are necessary.

This object is achieved with a connection accessory device which is a simple sleeve shaped hollow structure having a hollow main body and a center bore, and is to be fitted externally over the pole at the end to receive the tool handle. The device has two external flexible arms on opposing side of the main body, springily protruding outward. Each arm has two ends, one attached to the main body and the other being an unattached end (referred to as press end hereinafter). The press end has an external surface and an inner surface and on the inner surface there is provided a small protruding tip. Underneath the press ends, there are two opening windows provided through the main body on opposing sides to allow the protruding tips to pass through when the arms are pushed. In use, once the device is put in position (or installed) on the pole, the press ends of the arms are generally aligned with two bores of the pole on each side respectively. The center bore accommodates the end of the pole and, in installation, the pole end is inserted into the center bore from one end but does not pass through the other end of the center bore. In other words, at the end to receive the tool handle, the pole's rim is covered by the main body's rim. The main body's rim has two recessed and tapered ramps extending across the rim from the outer surface of the main body to the center bore. The recessed ramps are generally aligned with the arms on the opposing sides respectively and serve as the guides for the pins on the tool handle when they are entering into the pole.

For disconnecting the tool handle from the pole equipped with the connection device of the present invention, where the V-clip's pins are extending from the tool handle through the bores of the pole and locking the handle in place inside the pole, the user squeezes the flexible arms with two fingers, which causes the protruding tips on the inner surface of the press ends to pass through the opening windows of the main body, come into contact with the pins of the tool handle, and further push the pins inwardly until the pins are out of the bores. Once the pins are pushed completely out of the bores, the tool handle is unlocked and can freely slide out of the pole for disconnection. During the process, the user's fingers are on the external surface of the press end, not in direct contract with the pins, and so would not get pinched by the pins.

Similarly, during the connecting process, with the connection device of the present invention attached to the end of the pole, there is no need for using the fingers to press down the pins on the tool handle for insertion into the pole, because the tapered ramps on the device main body's rim guides the pins and gradually push them down so that the tool handle can be easily inserted into the pole (as the tapered ramps transfer the lateral insertion force into the inwardly pushing force on the pins).

Because the fingers are further away from the pins, they would not get pinched.

By way of example, but not in limitation, the elastic flexibility of the arms can be created from cantilevered shapes that are integral parts of the device made by plastic injection. Of course, other methods may be used to make the springy arms to produce the present invention. The device and arms may be made integrally or made separately from different materials and then put together by an attaching means, such as screws, adhesives, etc. Selection of the material for making the device and arms is not part of the invention. In other words, it can be made from any materials known to be suitable for the purpose by people of ordinary skill in the art at the current time or a future time. Preferably, the connection device is made from a polymer such as ABS (acrylonitrile butadiene styrene) via injection molding.

The center bore of the main body has a diameter matching the outer diameter of the pole, preferably between 1.0 - 5.0 cm. However, any diameter is suitable as long as it matches with the pole to be used, that is, it is slightly larger than the outer diameter of the pole so that the pole can be inserted into the center bore.

The recessed ramps may be optional if the entire rim of the main body is tapered from the outer surface towards the center bore. This simplifies the structure of the connection device, but loses its function of aligning and guiding the pins for insertion, which may or may not be important under given situations.

As another aspect of the present invention, the connection device may serve another function as a protector for the pole. By placing the connection device at the end of the telescopic pole, it protects the pole's end from damage in case the pole is subjected to impacts during shipping, storage, or handling by the user. Thus, the connection accessory serves a secondary function as a pole protector.

Another object of the present invention is to provide a multi-functional connection device which can be conveniently used to pick up metallic objects that have dropped to the bottom of a swimming pool. The object is realized by incorporating one or more pieces of magnet into the connection device so that metallic debris may be picked up at the same time the attached tool performs its work. Or, the pole may be used for such purpose (picking up metals) on its own, without having the tool attached.

The various features of novelty which characterize the invention are pointed out with particularity in the claims annexed to and forming a part of this disclosure. For a better understanding of the invention, its operating advantages, and specific objects attained by its use, reference should be made to the drawings and the following description in which are illustrated and described preferred embodiments of the invention.

### Brief description of the drawings

FIG 1 presents a set of perspective views of the connection device as a particular embodiment of the present invention.
FIG 2 presents a set of cross-sectional views of the connection device shown in FIG. 1.
FIG. 3 shows a preferred embodiment of the present invention where magnets are embedded on the outer surface of the connection device at the front opening.
FIG. 4 is a sketch depicting the process of disconnecting the tool handle from the pole as facilitated by the connection device of the present invention shown in FIG.1.
FIG. 5 is a sketch depicting the process of connecting the tool handle to the pole as facilitated by the connection device of the present invention shown in FIG. 1.

### Detailed description of particular embodiments of the invention

The present invention is now further described in connection to particular embodiments together with accompanying drawings thereof.

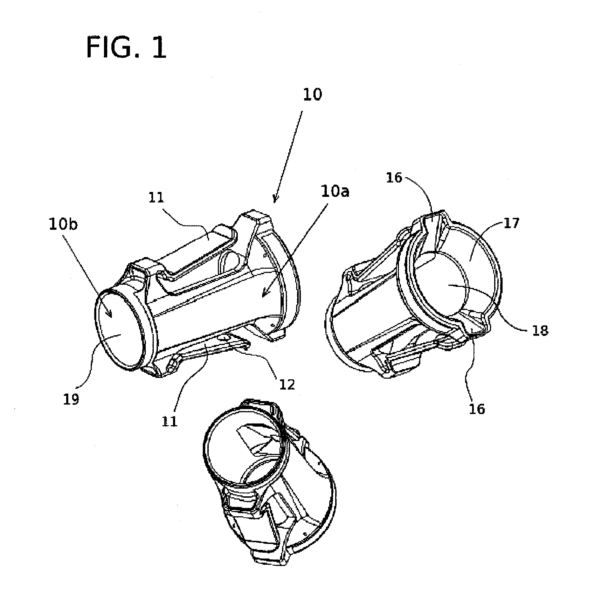

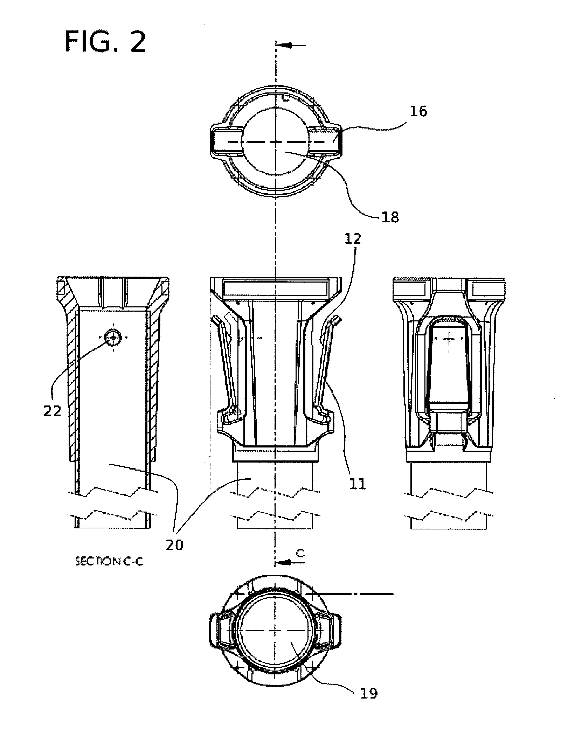

FIG. 1 presents a set of prospective views of a connection device according to the present invention. As shown, connection device 10 is a generally cylindrical shaped sleeve structure, having main body 10a and center bore 10b that has front opening 18 and back opening 19, and two protruding arms 11, each of which has an end connected to the main body and a free end (referred to as press end) extending outwardly away from the main body. On the inner surface of the press end of each arm, there is a small protruding tip 12. At the front opening, the rim 17 tapers from the outer surface toward the center bore on which there are two opposing recessed ramps 16 which are also tapered toward the center bore. Once installed as shown in FIG. 2, a pole 20 having two opposing bores 22 is inserted into the center bore of device 10 from back opening 19 but not passing through front opening 18. Device 10 is concentrically wrapping around the pole with bores 22 aligned with two protruding tips 12 of arms 11.

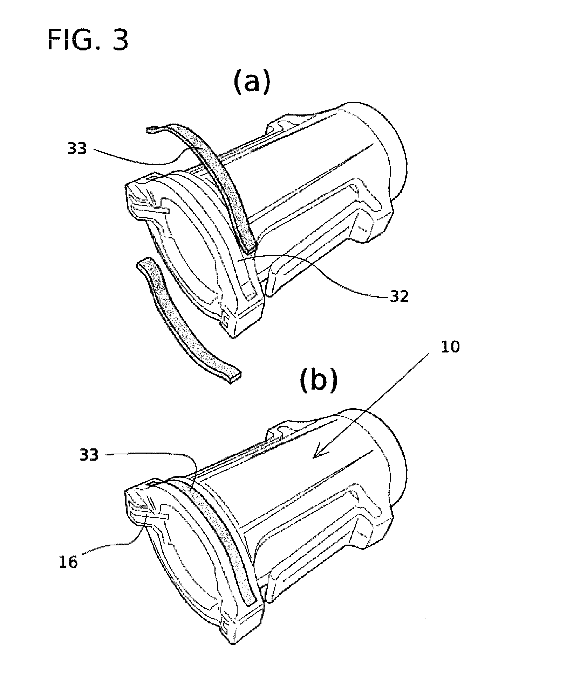

Preferable, as shown in FIG. 3 (a), device 10 has one or more grooves 32 on the outside of the rim at the front opening for accommodating magnets 33. FIG. 3(b) shows magnets 33 being embedded in the grooves. Two relatively large magnet pieces are shown in FIG. 3 but other configurations with smaller pieces of magnet are also possible.

In operation, as shown in FIG. 4, when the tool handle 40 is to be disconnected from the pole 20, starting from the assembled state as shown in FIG. 4(a) where pins 42 of V-clip 48 are protruding through bores 22 of the pole, locking the handle in position and the residual spring force (shown by the arrows 44) urges pins 42 to remain in the protruding state, an external force 46 exerted by the fingers on the press end of the arm 11, which is aligned with the pins, passes through the opening window of the main body, and pushes the pins inwardly via protruding tips 12 until the pins are completely out of the bores, which then allows the tool handle to slide out off the pole to complete the disconnection process as shown in FIG. 4(b). In this way, the fingers are protected by the arms 11 and not in direct contact with the pins and thus cannot get pinched between the pin and the bore as the parts move relative to each other.

FIG. 5 shows the opposite operation for connecting the tool handle to the pole. In FIG. 5(a), the handle 40, with the V-clip in its natural state as the pins elastically protrude outwards, is about to slide into the pole 20. In FIG. 5(b), as the tool handle slides into the pole, the pins encounter the tapered ramps at position 50 (pointed by the arrow), the further progress in sliding will squeeze the pins as the tapered ramps gradually narrow the opening until the pins are completely out of the way to allow continuous sliding towards the locked state shown in FIG. 4(a). In the process, the tapered ramps convert the lateral insertion force of the handle into an inwardly pushing force on the pins. As it can be seen, there is no need now for the fingers to press the pins in order to insert the tool handle into the pole and the role is overtaken by a pair of tapered ramps. Therefore, with the connection device of the present invention, the fingers will not get pinched when performing the connection process.

The device 10 is molded by plastic injection, which is a technology well known in the art and needs no further description. The plastic material used is acrylonitrile butadiene styrene, a polymer commonly known as ABS. The magnets, which are commonly available off-the-shelf, may be over-molded within the plastic injected part, or glued on during a secondary operation after the molding process.

While there have been described and pointed out fundamental novel features of the invention as applied to a preferred embodiment thereof, it will be understood that various omissions and substitutions and changes, in the form and details of the embodiments illustrated, may be made by those skilled in the art without departing from the spirit of the invention. The invention is not limited by the embodiments described above which are presented as examples only but can be modified in various ways within the scope of protection defined by the appended patent claims.

## Claims

1. A pole connection device (10), comprising: (a) a main body (10a) of a generally tubular structure with an external surface and a center bore (10b), and (b) two flexible arms (11) disposed on two opposing sides of said main body (10a), said flexible arms (11) each having a fixed end connected to said external surface of said main body and a press end extending outwardly away from said external surface, said press end having an inner surface facing towards said external surface of said main body and an outer surface facing away from said external surface of said main body, said inner surface having a protruding tip (12), and said external surface of said main body having two opposing opening windows that allow respectively said protruding tip (12) of each flexible arm (11) to pass through when said flexible arms (11) are pushed and resiliently bent towards said external surface of said main body (10a).

2. The pole connection device (10) according to claim 1, further comprising opposing ramps (16) on the inside rim (17) of said main body (10a), said ramps (16) being a tapered recess across said rim.

3. The pole connection device (10) according to claim 1 or 2, wherein said main body (10a) and two flexible arms (11) are integrally made by an injection molding method.

4. The pole connection device (10) according to any one of claims 1 to 3, wherein said main body (10a) and two flexible arms (11) are made of an identical material.

5. The pole connection device (10) according to any one of claims 1 to 3, wherein said main body (10a) and two flexible arms (11) are made of different materials.

6. The pole connection device (10) according to any one of claims 1 to 5, further comprising at least one magnet (33) disposed on said external surface of said main body (10a).

7. The pole connection device (10) according to claim 6, wherein said magnet (33) is over-molded with said main body (10a).

8. The pole connection device (10) according to claim 6, wherein said magnet (33) is glued to said main body (10a) on a secondary opening.

9. The pole connection device (10) according to any one of claims 1 to 8, wherein the main body (10a) is made from polymer.

10. The pole connection device (10) according to claim 9, wherein said polymer is acrylonitrile butadiene styrene.
